# DEMANDE DE BREVET EUROPEEN

(11) **EP 2 886 823 A1**
(43) Date de publication de la demande: **24.06.2015**
(21) Numéro de dépôt: 14195472.7
(22) Date de dépôt: 28.11.2014
(51) Int. Cl.: F02B 29/04, F28D 21/00

(54) **Échangeur de chaleur comprenant un faisceau muni de moyens permettant de limiter les mouvements dudit faisceau d'échange par rapport aux parois du boîtier**

(30) Priorité: 18.12.2013 FR 1362905
(71) Demandeur: Valeo Systemes Thermiques, 78320 Le Mesnil-Saint-Denis (FR)
(72) Inventeur: Ferlay, Benjamin, 78720 CERNAY LA VILLE (FR)
(74) Mandataire: Metz, Gaëlle

(57) **Abrégé**

La présente invention concerne un échangeur de chaleur comprenant un boîtier adapté pour envelopper un faisceau d'échange de chaleur, ledit boîtier étant pourvu d'une ouverture permettant de recevoir ledit faisceau d'échange de chaleur à l'intérieur dudit boîtier, ledit faisceau d'échange de chaleur comprenant une première extrémité adaptée pour obturer l'ouverture du boîtier lorsque le faisceau d'échange de chaleur est inséré à l'intérieur dudit boîtier, dans lequel une deuxième extrémité du faisceau d'échange de chaleur opposée à ladite première extrémité est pourvue d'au moins une protubérance et dans lequel la paroi du boîtier est pourvue d'un élément de contact (50) adapté pour maintenir ladite protubérance afin de limiter le mouvement de la deuxième extrémité du faisceau d'échange de chaleur par rapport à ladite paroi du boîtier.

## Description

### Domaine de l'invention

La présente invention concerne un échangeur de chaleur, par exemple un échangeur de chaleur destiné à un véhicule automobile. Plus précisément, l'invention concerne un échangeur de chaleur permettant l'échange entre un premier fluide et un deuxième fluide, dans lequel le premier fluide est, par exemple, un fluide tel que de l'air et le deuxième fluide est, par exemple, un fluide liquide tel que de l'eau. L'échangeur de chaleur, selon la présente invention, est particulièrement adapté afin d'être utilisé pour le refroidissement de l'air de suralimentation.

### Etat de la technique

De nos jours, les moteurs à combustion des véhicules automobiles sont fréquemment alimentés en air comprimé afin d'améliorer les performances desdits moteurs. Cet air comprimé est souvent désigné à l'aide du terme « air de suralimentation ». L'air comprimé est obtenu en utilisant un compresseur entraîné par les gaz d'échappement. Par conséquent, la compression de l'air a pour effet d'échauffer l'air comprimé. Il s'avère nécessaire de refroidir l'air comprimé avant son introduction à l'intérieur du moteur, afin d'abaisser la température dudit air comprimé avant son introduction dans un cylindre du moteur.

Pour refroidir l'air comprimé, il est connu d'utiliser un échangeur de chaleur comprenant un faisceau d'échange de chaleur constitué d'un assemblage de plaques, positionnées les unes sur les autres et formant, en combinaison, un conduit permettant de guider un premier fluide tel qu'un liquide, d'une entrée vers une sortie. Afin d'améliorer l'échange de chaleur, l'assemblage des plaques est complété grâce à des éléments intercalaires ondulés.

Le faisceau d'échange de chaleur est positionné à l'intérieur d'un carter ou boîtier. Ce boîtier est pourvu d'une entrée et d'une sortie pour le deuxième fluide à refroidir, tel que l'air, et est adapté pour guider le deuxième fluide d'une entrée vers une sortie. Le boîtier a la fonction d'une boîte collectrice enveloppant ledit faisceau de chaleur et permettant l'admission et la régulation de l'air de suralimentation. Un tel boîtier est par exemple moulé dans une matière telle que l'aluminium ou le plastique.

En pratique, les parois du boîtier sont relativement fines et relativement souples. Ainsi, lors de l'utilisation du boîtier, le volume dudit boîtier peut augmenter en fonction de l'augmentation de la pression et de la température à l'intérieur du boîtier.

Le boîtier d'un échangeur de chaleur, selon l'art antérieur, est pourvu d'une ouverture permettant d'introduire le faisceau d'échange de chaleur à l'intérieur du boîtier. En pratique, le boîtier se présente essentiellement sous la forme d'une boîte comprenant cinq parois. La sixième paroi est supprimée afin de permettre au faisceau d'échange de chaleur d'être introduit à l'intérieur du boîtier en déplaçant ledit faisceau d'échange vers l'intérieur du boîtier selon une direction d'introduction. Lorsque le faisceau d'échange de chaleur est en place, la sixième paroi du boîtier est formée par un capot auquel est fixée une première extrémité du faisceau d'échange. Pour ce type d'application, le capot permet de connecter l'assemblage des plaques et des éléments intercalaires ondulés de l'échangeur de chaleur et de fixer l'ensemble contre ledit capot. Le capot est pourvu de conduits permettant au fluide tel qu'un liquide, d'entrer à l'intérieur de l'échangeur de chaleur et de sortir de l'échangeur de chaleur. Le capot fixé au faisceau d'échange de chaleur réalise une fonction de fermeture de l'ouverture permettant l'introduction de l'échangeur de chaleur. Ainsi, dans un premier temps, le faisceau d'échange de chaleur est enveloppé ou entouré des parois du boîtier et, dans un deuxième temps, entouré du capot.

Dans sa position d'utilisation, le capot, auquel le faisceau d'échange de chaleur est fixé, se trouve en principe positionné de façon essentiellement horizontale, au-dessus dudit faisceau d'échange de chaleur. En d'autres termes, le faisceau d'échange de chaleur est suspendu au capot.

Les échangeurs de chaleur connus de l'art antérieur présentent plusieurs inconvénients. Dans un premier temps, la connexion entre le boîtier et le capot est très fragile et doit résister à pression élevée et aux températures élevées présentes à l'intérieur de l'échangeur de chaleur. De plus, les parois du boîtier peuvent, lors de l'utilisation normale de l'échangeur de chaleur, se déformer sous la pression de l'air chaud présent à l'intérieur dudit échangeur de chaleur. Cette déformation, constante lors de l'utilisation de l'échangeur de chaleur, peut provoquer une usure prématurée du matériau utilisé lors de la fabrication du boîtier. Ainsi, la fiabilité du boîtier peut être altérée.

De plus, dans la mesure où le faisceau d'échange de chaleur est suspendu au capot, le faisceau d'échange de chaleur peut présenter des mouvements pendulaires sous l'influence des vibrations imposées par le fonctionnement du moteur du véhicule avec lequel l'échangeur de chaleur est utilisé. La répétition de ces mouvements pendulaires, tout particulièrement en présence d'un effet de résonnance, peut avoir une influence néfaste sur la fiabilité de l'échangeur de chaleur.

### Objet de l'invention

L'échangeur de chaleur selon la présente invention vise à remédier aux inconvénients des échangeurs de chaleurs, tels que divulgués dans l'état de la technique, en proposant une nouvelle conception quant à la fixation d'un faisceau d'échange de chaleur à l'intérieur du boîtier d'un échangeur de chaleur.

A cet effet, la présente invention concerne un échangeur de chaleur comprenant un boîtier adapté pour envelopper un faisceau d'échange de chaleur, ledit boîtier étant pourvu d'une ouverture permettant de recevoir ledit faisceau d'échange de chaleur à l'intérieur dudit boîtier, ledit faisceau d'échange de chaleur comprenant une première extrémité adaptée pour obturer l'ouverture du boîtier lorsque le faisceau d'échange de chaleur est inséré à l'intérieur dudit boîtier, dans lequel une deuxième extrémité du faisceau d'échange de chaleur opposée à ladite première extrémité est pourvue d'au moins une protubérance et dans lequel la paroi du boîtier est pourvue d'un élément de contact adapté pour maintenir ladite protubérance afin de limiter le mouvement de la deuxième extrémité du faisceau d'échange de chaleur par rapport à ladite paroi du boîtier.

La limitation du mouvement pendulaire de l'échangeur de chaleur réside dans le fait que la deuxième extrémité du faisceau d'échange de chaleur ne peut se déplacer par rapport aux parois du boîtier à cause de la présence d'au moins une protubérance et de l'élément de contact adapté pour assurer le contact avec ladite protubérance. En d'autres termes, la sécurisation de la connexion entre le boîtier et le capot est améliorée par l'absence de mouvement pendulaire du faisceau d'échange par rapport au boîtier sous l'influence des vibrations imposées par le fonctionnement du moteur du véhicule avec lequel l'échangeur de chaleur est utilisé.

Selon un mode de réalisation particulier de l'invention, le faisceau d'échange de chaleur est introduit à l'intérieur du boîtier selon une direction d'introduction, la protubérance s'étendant essentiellement dans ladite direction d'introduction et, ledit élément de contact étant adapté pour maintenir la protubérance afin de limiter le mouvement de ladite protubérance par rapport à la paroi du boîtier dans une direction essentiellement perpendiculaire à la direction d'introduction.

Selon un mode de réalisation particulier de l'invention, la paroi du boîtier est pourvue d'une ouverture permettant de laisser passer ladite protubérance à travers ladite paroi dudit boîtier.

Selon un mode de réalisation particulier de l'invention, l'élément de contact est adapté pour être fixé sur l'extérieur de la paroi du boîtier afin de maintenir la protubérance et de couvrir ladite ouverture.

Selon un mode de réalisation particulier de l'invention, la protubérance se présente essentiellement sous la forme d'une cheville.

Selon un mode de réalisation particulier de l'invention, l'élément de contact se présente essentiellement sous la forme d'un capuchon.

Selon un mode de réalisation particulier de l'invention, le faisceau d'échange de chaleur comprend un assemblage de plaques ainsi que des éléments intercalaires ondulés, dans lequel les plaques et les éléments intercalaires ondulés et ladite au moins une protubérance sont assemblés au moyen d'un procédé de brasage.

### Brève descriptions des dessins

Les but, objet et caractéristiques de la présente invention ainsi que ses avantages apparaîtront plus clairement à la lecture de la description qui suit, des modes de réalisation préférés d'un échangeur de chaleur selon l'invention, faite en référence aux dessins dans lesquels :
- la figure 1 montre une vue, en perspective, d'un échangeur de chaleur au sein d'un boîtier selon un premier mode de réalisation de la présente invention, avec une partie extérieure du boîtier retirée afin de montrer les éléments présents à l'intérieur dudit échangeur de chaleur, à titre d'exemple ;
- la figure 2 représente en détail la fixation du faisceau d'échange de chaleur aux parois du boîtier de l'échangeur de chaleur, à titre d'exemple ;
- la figure 3 montre, de façon schématique la fixation du faisceau d'échange de chaleur sur les parois du boîtier de l'échangeur de chaleur, ladite fixation comportant trois protubérances fixées sur la deuxième extrémité du faisceau d'échange et dépassant de la paroi dudit boîtier, et
- la figure 4 représente, de façon schématique, la fixation d'une protubérance permettant de limiter les mouvements de ladite protubérance par rapport à la paroi du boîtier grâce à un élément de contact se présentant sous la forme d'un « capuchon ».

### Description détaillée des modes de réalisation

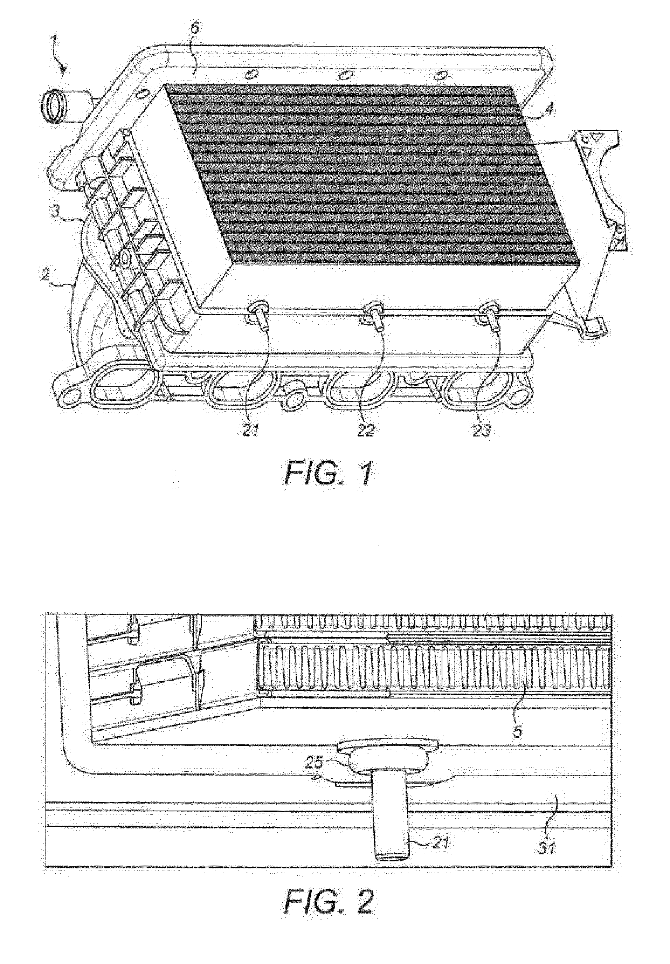

La figure 1 montre une vue en perspective d'un mode de réalisation d'un échangeur de chaleur 1 selon la présente invention. Une partie de l'extérieur de l'échangeur de chaleur 1 a été retirée afin de montrer l'intérieur dudit échangeur de chaleur 1.

L'échangeur de chaleur 1 tel que montré sur la figure 1 est particulièrement adapté pour une utilisation dans l'industrie automobile afin de refroidir l'air de suralimentation (RAS) d'un moteur thermique. L'échangeur de chaleur 1 permet de refroidir l'air de suralimentation par échange thermique avec un premier fluide, comme l'air extérieur, ou un liquide comme, par exemple, l'eau de refroidissement d'un moteur, formant ainsi un échangeur de type air/air ou liquide/air.

Dans un premier temps, l'échangeur de chaleur 1 comprend un collecteur d'admission 2, souvent désigné par l'homme du métier sous la dénomination anglaise « intake manifold ». Le collecteur d'admission 2 est fixé à la culasse de la chambre de combustion du moteur (non montré), c'est-à-dire à l'entrée du cylindre. En fonction du régime du moteur, l'air peut être refroidi, totalement, partiellement ou l'air peut ne pas être refroidi. Le collecteur d'admission 2 est connecté à un boîtier 3. Le boîtier 3 forme une enveloppe pour entourer un faisceau d'échange de chaleur 4 se trouvant à l'intérieur dudit boîtier 3.

Le faisceau d'échange de chaleur 4, selon la présente invention, est positionné à l'intérieur d'un boîtier 3. Le boîtier 3 est pourvu d'une entrée et d'une sortie pour un premier fluide gazeux et est adapté pour guider ledit premier fluide d'une entrée vers une sortie.

L'échangeur de chaleur 1 selon la présente invention comprend un faisceau d'échange de chaleur 4 constitué d'un assemblage de plaques, positionnées les unes sur les autres et formant en combinaison un conduit permettant de guider un deuxième fluide liquide, utilisé pour refroidir le premier fluide liquide, d'une entrée vers une sortie. Afin d'améliorer l'échange de chaleur, l'assemblage des plaques est complété grâce à des éléments intercalaires ondulés.

Selon un fonctionnement connu, un premier fluide tel que l'air passe à l'extérieur du faisceau d'échange de chaleur 4 et un deuxième fluide, tel que l'eau du circuit de refroidissement, circule à l'intérieur du faisceau d'échange de chaleur 4 et permet ainsi à l'air d'être refroidi.

Le faisceau d'échange de chaleur 4 est formé d'un assemblage de plaques embouties, encore appelées « demi-lames ». Cependant, l'invention s'applique également à d'autres types de faisceaux, et notamment à des faisceaux comportant des tubes et des ailettes. Le faisceau d'échange de chaleur 4, tel que montré sur la figure 2, est formé d'un empilement de plaques embouties disposées par paires et, réalisées à l'identique. Seules les deux plaques d'extrémité formant l'extrémité supérieure et l'extrémité inférieure du faisceau d'échange de chaleur 4, comme montré sur la figure 1, sont de forme différente par rapport aux plaques embouties empilées.

Chaque plaque emboutie présente une forme rectangulaire et comporte une paroi de fond sensiblement plane, limitée par un rebord périphérique de forme rectangulaire, et surélevée par rapport à la paroi de fond pour former une cuvette peu profonde. Chaque paire de plaques embouties délimite une chambre. L'utilisation d'une plaque de ce type est connue de l'homme du métier.

Les plaques embouties, disposées par paires, forment le faisceau d'échange de chaleur 4. Le bossage respectif d'une plaque emboutie appartenant à une paire est en communication avec le bossage respectif d'une plaque emboutie adjacente appartenant à une partie des plaques embouties voisines.

Le faisceau d'échange de chaleur 4 comprend des éléments intercalaires ondulés 5, comme montré sur la figure 2, disposés entre des paires de plaques embouties adjacentes. Les différentes plaques embouties et les éléments intercalaires ondulés 5 sont, selon une technique connue, assemblées grâce à un processus de brasage. Après assemblage, le faisceau d'échange de chaleur 4 délimite des premiers canaux pour le gaz à refroidir, dans lesquels sont présents les éléments intercalaires ondulés 5, et des seconds canaux (non montré) pour la circulation du liquide de refroidissement obtenu en utilisant des plaques.

Les composants du faisceau d'échange de chaleur 4 comprenant les plaques embouties, les éléments intercalaires ondulés 5, le collecteur d'admission et turbuleurs d'entrée et de sortie du liquide de refroidissement sont avantageusement réalisés dans un alliage d'aluminium, assemblés entre eux et brasés en une seule opération dans un four de brasage.

Comme montré sur la figure 1, la partie supérieure du faisceau d'échange de chaleur 4 est fixée sur un élément de fermeture 6 tel qu'une plaque ou un capot 6. Le capot 6 réalise plusieurs fonctions. Une des fonctions consiste à permettre une entrée et une sortie du liquide de refroidissement au moyen de tubulures disposées sur le capot 6. Par ailleurs, le capot 6 forme l'élément de fermeture du boîtier 3. Ainsi, lorsque l'échangeur de chaleur 1 est assemblé, le faisceau d'échange de chaleur 4 est enveloppé, d'une part, par les parois formées par le boîtier 3, et, d'autre part, par le capot 6.

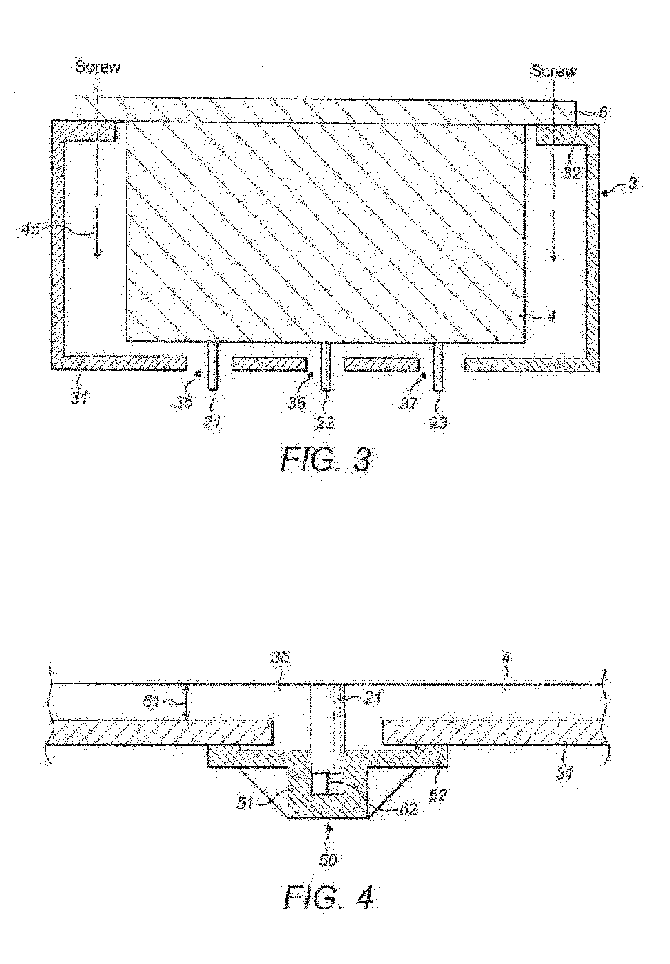

Comme montré sur la figure 2, l'échangeur de chaleur 1 selon la présente invention est pourvu d'une protubérance 21 qui est fixée à l'extrémité inférieure du faisceau d'échange de chaleur 4. La protubérance 21 se présente sous la forme d'une cheville et est adaptée pour traverser la paroi inférieure 31 du boîtier 3 et être fixée à ladite paroi inférieure 31 du boîtier 3, par tout moyen adapté, comme montré sur la figure 4.

La figure 2 représente en détail un premier mode de réalisation de la protubérance 21. La figure 2 montre que la paroi inférieure 31 du boîtier 3 comporte une ouverture permettant de laisser passer ladite protubérance 21. La protubérance 21 est fixée à l'extrémité inférieure d'un faisceau d'échange de chaleur 4 grâce à un processus de brasage. Cela signifie que pendant l'assemblage du faisceau d'échange de chaleur 4, une seule opération, réalisée dans un four de brasage, permet d'assembler un faisceau d'échange de chaleur 4 et de fixer la protubérance 21 sur la paroi inférieure 31 du faisceau d'échange de chaleur 4.

La figure 3 montre de façon schématique la fixation du faisceau d'échange de chaleur 4 à l'intérieur du boîtier 3 comprenant trois protubérances 21, 22, 23.

Dans un premier temps, la figure 3 montre que le faisceau d'échange de chaleur 4 a été introduit à l'intérieur dudit boîtier 3 en déplaçant ledit faisceau d'échange de chaleur 4 dans la direction d'introduction indiquée à l'aide de la flèche 45. Une telle introduction est réalisable grâce à une ouverture quasi totale de la paroi supérieure 32 du boîtier 3. L'introduction du faisceau d'échange de chaleur 4 vers l'intérieur du boîtier 3 est également possible grâce au déplacement du faisceau d'échange de chaleur, de la paroi supérieure 32 en direction de la paroi inférieure 31 du boîtier 3.

Lorsque le faisceau d'échange de chaleur 4 est complètement introduit à l'intérieur du boîtier 3, la paroi supérieure 32 du boîtier 3 est formée par le capot 6 auquel le faisceau d'échange de chaleur 4 est suspendu. Le capot 6 est fixé sur la paroi supérieure 32 à l'aide de tout moyen adapté, par exemple, des vis. Afin de fixer la deuxième extrémité du faisceau d'échange de chaleur 4 à la paroi inférieure 31, ladite paroi inférieure 31 est pourvue d'ouvertures 35, 36, 37.

Comme indiqué sur la figure 3, la dimension des ouvertures 35, 36, 37 est relativement importante par rapport à la dimension des protubérances 21, 22, 23. Ainsi, l'écart de dimension entre la dimension des ouvertures 35, 36, 37 et celle des protubérances 21, 22, 23 facilite l'introduction du faisceau d'échange de chaleur 4 selon l'invention ainsi que son assemblage. De plus, la dimension des ouvertures 35, 36, 37 de l'échangeur de chaleur 4 selon l'invention permet d'assembler les composants dudit échangeur de chaleur selon l'invention avec une relative tolérance quant aux dimensions desdits composants, sans pour autant compromettre l'assemblage dudit échangeur de chaleur 4. Lorsque le faisceau d'échange de chaleur 4 est correctement positionné à l'intérieur du boîtier 3, les extrémités des protubérances 21, 22, 23 sont fixées par rapport à la paroi inférieure 31 du boîtier 3. La fixation des protubérances 21 sur la paroi inférieure 31 est montrée sur la figure 4.

La figure 4 représente la fixation de l'extrémité de la protubérance 21 par rapport à la paroi inférieure 31, ladite fixation utilisant un élément de contact 50 se présentant sous la forme d'un chapeau ou d'un capuchon. L'élément de contact 50 est pourvu d'un premier élément 51 adapté pour recevoir en son sein l'extrémité de la protubérance 21. L'élément de contact 50 comprend un deuxième élément 52 adapté pour fixer ledit élément de contact 50 sur la paroi inférieure 31. La deuxième partie 52 présente des dimensions adaptées pour obturer l'ouverture 35 permettant le passage de la protubérance 21 à travers la paroi inférieure 31.

Comme montré sur la figure 4, le mouvement de la protubérance par rapport à la paroi 31 est possible, selon un fonctionnement normal de l'échangeur de chaleur 4 et selon la direction longitudinale de la protubérance 21, lorsque l'extrémité de ladite protubérance 21 est fixée par rapport à la paroi inférieure 31 du boîtier 3, à l'aide de l'élément de contact 50. En revanche, le mouvement de la protubérance 21 est limité, par rapport au mouvement d'un échangeur de chaleur selon l'état de l'art, dans la direction perpendiculaire à la direction longitudinale de la protubérance 21.

Ainsi, en référence à la figure 3, le mouvement de la protubérance 21 est possible selon la direction d'introduction 45 du faisceau d'échange de chaleur 4. En revanche, le mouvement de ladite protubérance 21 est limité selon une direction perpendiculaire par rapport à ladite direction d'introduction 45.

Les protubérances 21, 22, 23, telles que montrées dans les figures 1, 2, 3 et 4 peuvent se présenter sous une forme essentiellement cylindrique ou, alternativement, sous une forme carrée. Les protubérances 21, 22, 23 peuvent être composées d'aluminium. Ainsi, lesdites protubérances peuvent être fixées au faisceau d'échange de chaleur 4 pendant l'assemblage dudit faisceau d'échange de chaleur 4 lors d'un procédé de brasage.

Alternativement, les protubérances 21, 22, 23 peuvent être réalisées à l'aide d'un matériau plastique.

L'élément de contact 50 peut être composé d'un matériau plastique. Ainsi, lorsque la paroi inférieure 31 du boîtier 3 est composée d'un même type de matériau plastique, l'élément de contact 50 peut être fixé sur la paroi inférieure 31 du boîtier 3 grâce, par exemple, à un procédé de soudure ultrasonique, à un procédé de soudure connu sous la dénomination anglaise « hot plate welding » ou encore grâce à tout moyen adhésif adapté tel qu'une colle.

Comme indiqué sur la figure 4, un premier espace libre 61 est présent entre l'extrémité inférieure du faisceau d'échange de chaleur 4 et la paroi inférieure 31. Cet espace libre permet un jeu lors de l'assemblage et de l'utilisation du faisceau d'échange de chaleur 4 et du boîtier 3.

Un deuxième espace libre 62 est présent entre l'extrémité de la protubérance 21 et l'intérieur de la première partie 51 de l'élément de contact 50. Ce deuxième espace libre 62 permet d'éviter toute pression sur la protubérance 21 et, par conséquent, sur l'extrémité inférieure du faisceau d'échange de chaleur 4 après l'assemblage.

Lorsque les protubérances 21, 22, 23 sont fixées sur la paroi inférieure 31 du boîtier 3, plusieurs effets techniques sont réalisés. Notamment, la rigidité de l'échangeur de chaleur 1 augmente.

Par ailleurs, lorsque la paroi inférieure du faisceau d'échange de chaleur 4 est fixée sur la paroi 31 du boîtier 3, ce faisceau d'échange de chaleur 4 ne peut plus effectuer de mouvement pendulaire. En d'autres termes, l'effet d'usure néfaste engendré par les mouvements pendulaires est donc supprimé.

Au sein des exemples de modes de réalisation décrits ci-dessus, il est indiqué que les éléments de fixation 21, 22, 23, peuvent être fixés à l'extrémité inférieure du faisceau d'échange de chaleur 4 grâce à un processus de brasage. Tout autre procédé de fixation d'éléments de fixation peut être envisagé, par exemple, grâce à l'utilisation d'un moyen adhésif adapté.

## Revendications

1. Echangeur de chaleur (1) comprenant un boîtier (3) adapté pour envelopper un faisceau d'échange de chaleur (4), ledit boîtier (3) étant pourvu d'une ouverture permettant de recevoir ledit faisceau d'échange de chaleur (4) à l'intérieur dudit boîtier (3), ledit faisceau d'échange de chaleur (4) comprenant une première extrémité adaptée pour obturer l'ouverture du boîtier (3) lorsque le faisceau d'échange de chaleur (4) est inséré à l'intérieur dudit boîtier (3), **caractérisé en ce que** une deuxième extrémité du faisceau d'échange de chaleur (4) opposée à ladite première extrémité est pourvue d'au moins une protubérance (21) et dans lequel la paroi du boîtier (31) est pourvue d'un élément de contact (50) adapté pour maintenir ladite protubérance (21) afin de limiter le mouvement de la deuxième extrémité du faisceau d'échange de chaleur (4) par rapport à ladite paroi du boîtier.

2. Echangeur de chaleur (1) selon la revendication 1, dans lequel le faisceau d'échange de chaleur (4) est introduit à l'intérieur du boîtier (3) selon une direction d'introduction, la protubérance (21) s'étendant essentiellement dans ladite direction d'introduction et, ledit élément de contact (50) étant adapté pour maintenir la protubérance (21) afin de limiter le mouvement de ladite protubérance par rapport à la paroi du boîtier (31) dans une direction essentiellement perpendiculaire à la direction d'introduction.

3. Echangeur de chaleur (1) selon les revendications 1 ou 2, dans lequel la paroi du boîtier (31) est pourvue d'une ouverture permettant de laisser passer ladite protubérance (21) à travers ladite paroi dudit boîtier (31).

4. Echangeur de chaleur (1) selon l'une des revendications précédentes, dans lequel l'élément de contact (50) est adapté pour être fixé sur l'extérieur de la paroi du boîtier (31) afin de maintenir la protubérance (21) et de couvrir ladite ouverture.

5. Echangeur de chaleur (1) selon l'une des revendications précédentes, dans lequel la protubérance (21) se présente essentiellement sous la forme d'une cheville.

6. Echangeur de chaleur (1) selon l'une des revendications précédentes, dans lequel l'élément de contact (50) se présente essentiellement sous la forme d'un capuchon.

7. Echangeur de chaleur (1) selon l'une des revendications précédentes, dans lequel le faisceau d'échange de chaleur (4) comprend un assemblage de plaques ainsi que des éléments intercalaires ondulés, dans lequel les plaques et les éléments intercalaires ondulés et ladite au moins une protubérance (21, 22, 23) sont assemblés au moyen d'un procédé de brasage.
